Europäisches Patentamt

European Patent Office

Office européen des brevets

(11) Publication number: **0 365 951**
A2

# EUROPEAN PATENT APPLICATION

(21) Application number: 89119110.8

(22) Date of filing: 14.10.89

(51) Int. Cl.5: **B29C 51/42** , **B29C 35/16**

(30) Priority: 24.10.88 FR 8814229

(43) Date of publication of application:
02.05.90 Bulletin 90/18

(84) Designated Contracting States:
AT BE CH DE ES FR GB GR IT LI LU NL SE

(71) Applicant: **SOCIETE INDUSTRIELLE DE L'ANHYDRIDE CARBONIQUE**
29, Rue Emile Zola
F-95872 Bezons Cédex(FR)

(72) Inventor: **Bordat, Michel**
Residence Le Coteaux 2, rue Mouillard
F-69009 Lyon(FR)

(74) Representative: **Roesner, Werner**
MESSER GRIESHEIM GmbH Patentabteilung
Lärchenstrasse 137 Postfach 83 00 48
D-6230 Frankfurt 83(DE)

(54) Method and device for the cooling of articles produced by thermoforming.

(57) - Production of articles by thermoforming.
- The method of cooling articles produced by thermoforming consists:
. in covering the shaped blank with a cover delimiting a volume of confinement connected to the atmosphere,
. in injecting a cooling fluid into the volume of confinement, which fluid then expands before escaping naturally into the atmosphere,
. in interrupting the injection as soon as a thermometric probe, placed in contact with the volume, detects an adjustable low control temperature threshold,
. and then in removing the cover to uncover the blank.
- Application to the thermoforming of articles made from thermoplastic material.

Fig. 1

## METHOD AND DEVICE FOR THE COOLING OF ARTICLES PRODUCED BY THERMOFORMING

The present invention relates to the technique of producing articles by the thermoforming of a sheet or panel, more generally known as a blank, of raw material having a generally reversible thermoplasticity characteristic.

The method of manufacturing articles or various objects from a blank of thermoplastic material consists in heating such a blank up to a temperature threshold corresponding to a certain degree of thermoplasticity compatible with the shape which must be produced.

Once such a blank is heated to the desired threshold, this blank is applied against a die having a positive and/or negative shape and constituting the pattern of the article or the object to be reproduced. Such application can be made by means of a complementary punch or vacuum suction.

The application is maintained for a specified time during which a cooling phase occurs for the purpose of bringing the temperature of the shaped blank below the thermoplasticity threshold enabling its ejection or removal.

The cooling phase would therefore appear important in a continuous manufacturing process because the production rate of the installation depends on its duration.

It is appropriate to consider that the cooling also includes that necessary for the die which, as the work cycles proceed, receives and stores calories from the successive blanks.

If a specific cooling of the die is not provided, the latter acts in such a way as to delay the cooling by itself supplying the shaped blank with a certain number of calories as the cooling of the latter proceeds.

At present, a distribution of fluid, generally air, preferably with water spraying, is provided in order to cool a shaped blank. This technique enables, by way of example, the production of six articles per hour when manufacturing thermoformed containers from blanks having a thickness of 8mm and a mass of 8 kg, made from a material such as acrylonitrile butadiene styrene requiring a temperature rise of at least 170°C in order to reach a suitable thermoplasticity threshold.

In order to attempt to increase the production rate of an installation working under conditions such as those mentioned above, the examination of the manufacturing cycle enables it to be noted that it would not appear possible to vary the heating, forming and assembly-disassembly stages which are governed by the nature of the raw material and by the dimensional characteristics of the blank.

The only possibility consists in attempting to save time during the cooling phase but, up to present, attempts made to modify the air circulation or water spraying conditions have not provided significant results.

The object of the present invention is to solve this problem by proposing a new method and a new device for the cooling of articles produced by thermoforming.

The method and the device of the invention, designed to avoid a fundamental modification of currently existing equipment, enable a large increase in productivity by reducing the cooling time of each shaped blank, and also the cooling time of the die itself.

In order to achieve the above objectives, the cooling method is characterized in that it consists:
- in coverig the shaped blank with a cover delimiting a volume of confinement connected to the atmosphere,
- in injecting a cooling fluid into the volume of confinement, which fluid then expands before escaping naturally into the atmosphere,
- in interrupting the injection as soon as a thermometric probe, placed in contact with the volume, detects an adjustable low control temperature threshold,
- and then in removing the cover to uncover the blank.

Another object of the invention is a device for the implementation of the above method, this device being characterized in that it comprises, facing the die and on the opposite side of it with respect to a blank clamped to the frame by the blank clamp, a moving cover, delimiting a volume of confinement, connected to the atmosphere and connected to a source supplying a cooling fluid.

Various other characteristics will emerge from the description given below with reference to the appended drawings which show, by way of non-limitative examples, embodiments of the object of the invention.

Figure 1 is diagrammatic cross-sectional side view of an installation comprising the device of the invention.

Figure 2 is a diagram showing a possible development of the device according to the invention.

Figure 3 is a diagrammatic view showing a variant embodiment of the invention.

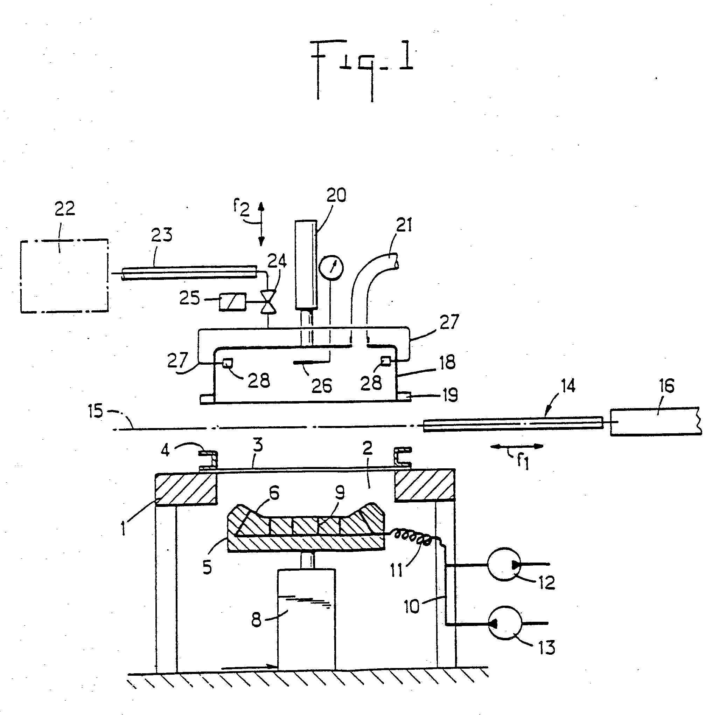

Figure 1 shows a thermoforming installation comprising a frame 1 delimiting a window 2 facing which a blank 3 to be thermoformed can be clamped and immobilized by a blank clamp 4.

The installation comprises, facing the window 2 and generally below the frame 1, a die 5 having, on its upper surface facing towards the window 2, an impression 6 corresponding to the pattern to be reproduced. The die 5 is made relatively mobile by, for example, being mounted on the end of the shaft 7 of a driving device 8, of the jack type, preferably rectilinear, which can be single or double acting.

It must of course be considered that the relative displacement of the die 5 could involve a motion of the frame 1.

The die 5 is produced in such a way as to have, in various places, suction channels 9 emerging at the upper surface of the impression 6. The channels 9 are produced in the form of a network and are connected to a circuit 10 by means of a flexible pipe 11. The circuit 10 is connected to a suction unit 12 and to a blower unit 13 whose functionings are placed under the control, for example, of an automated device for managing the functional cycle of the installation.

In addition to the above means, the installation comprises means of heating, denoted by the overall reference 14. These means 14 are intended to ensure the rise in temperature of the blank 3 up to a thermoplasticity threshold compatible with the shaping which must be imposed on it. The means 14 are, for example, constituted by radiant panels, using any appropriate energy and capable of being disposed opposite the blank 3, on the other side of the latter with respect to the die 5. The means 14 are also associated with means of withdrawal and for this purpose it is possible to envisage, for example, placing the panels 14 in relationship with a rectilinear guidance and support channel 15 and providing the relative displacement of it in either of the directions of the arrow $f_1$ by means of a drive device 16, such as a double acting rectilinear jack.

The installation described above comprises a cooling device having the overall reference 17. This device is composed of a cover 18 disposed facing the window 2 and on the opposite side of the die 5 with respect to the blank 3. The cover 18 is fitted such as it is mobile in a direction such as that of the arrow $f_2$, in order to be able to occupy a withdrawn position, as shown in Figure 1, or a position in which its rim 19 bears on the blank clamp 4. For this purpose, the cover 18 is associated with a drive unit 20, for example formed by a jack.

The cover 18 delimits a volume of confinement which is connected to the atmosphere by means of a duct 21 called the exhaust duct. The cover 18 is also connected to a source 22 of cooling fluid by a pipe 23 which is controlled by a valve 24. Preferably the valve 24 is controlled by an electro-valve 25 placed under the control of a thermometric probe 26 whose task is to detect a low temperature threshold, preferably adjustable. The pipe 23 is extended, beyond the valve 24, by branches 27 leading to jets or nozzles 28 borne by the cover 18 in order to be located inside the volume of confinement which the latter delimits.

Preferably, the cooling fluid is constituted by liquid carbon dioxide stored in the source 22 at a pressure of approximately $20.10^5$ Pa and at a temperature of $255°$ K. The jets 28 are produced in the form of calibrated nozzles intended to produce an expansion of the cooling fluid distributed inside the volume of confinement. By way of example, such jets are provided with calibrated nozzles of diameters between 0.5 mm and 1.5 mm.

The installation described above operates as follows:

After the positioning of the blank 3 on the window 2, the radiant panels 14 are moved in order to be disposed opposite the blank. The supply of the panels 14, in a continuous or discontinuous way, ensures the rise in temperature of the blank 3 up to the sought plasticity threshold. When this threshold is reached, the drive unit 8 is powered in order to raise the die 5 which is thus brought into contact with the blank 3 which is caused to undergo a forced deformation made possible by the plasticity of the constituent material. The application to follow, as close and as accurately as possible, the entire shape of the pattern 6 to be reproduced is completed by the setting into operation of the suction source 12 which has the task of establishing a relative vacuum in the space existing between the blank 3 and the pattern 6.

When the appropriate application has been obtained, the means 14 are withdrawn by commanding the operation of the motor 16.

The cover 18 is then lowered in order to ensure the application of the rim 19 on the blank clamp 4 in order to delimit a volume of confinement above the blank 3 and connected only with the ambient environment by means of the duct 21.

In this state, the electrovalve 25 is then commanded to distribute cooling fluid through the jets 28 and to contribute to the rapid cooling of the blank 3 in its preshaped state in application against the pattern 6. The distributed cooling fluid is expanded in the volume of confinement and escapes naturally via the duct 21 taking calories from the blank 3 and from the blank clamp 4. As cooling proceeds, the temperate inside the volume of confinement tends to lower and, when it reaches the pre-set control threshold, the probe 26 commands the closure of the electrovalve 25. After all of the expanded cooling fluid has exhausted to the atmosphere, the cover 18 can be raised in order to remove the blank 3 which is pre-shaped and rigidified or solidified in the shape which has been imposed on it by contact with and application against the pattern 6 of the die 5.

The blank clamp 4 can be removed in order to cause the ejection, removal or extraction of the pre-shaped blank 3, either by gripping means or solely by or in combination with the distribution of a fluid under pres-sure, such as air, supplied to the channels 9 by means of the pump 13.

By adjusting a low temperature threshold, between -70 and -10°C inside the volume of confinement, and by retaining the same operational conditions as those mentioned previously, the use of the means described above enables a gain in productivity of two articles per hour, i.e. a production rate increased by approximately 30%.

It must be considered that the method of the invention and the equipment for its implementation also enable an improvement in the cooling of the die 5 by the removal of calories by means of the cooling of the shaped blank 3.

The cooling fluid used can be different from that mentioned above and, in particular, can be constituted by liquid nitrogen. In such a case, the pressure and temperature conditions given before are specifically different.

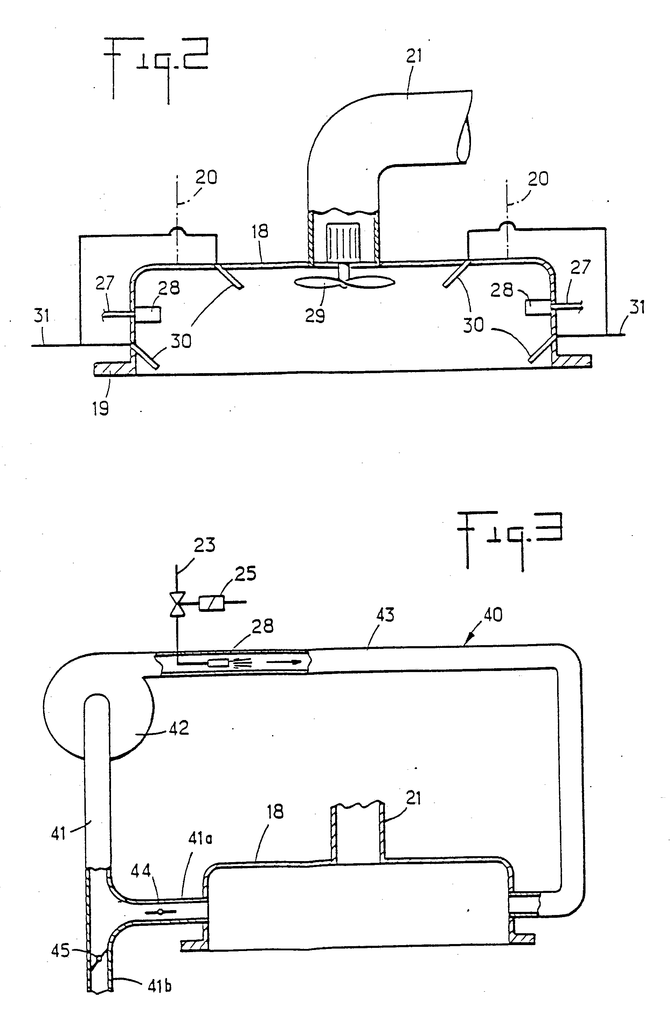

Figure 2 shows a variant embodiment in which the cover 18 is arranged in such a way as to enable the use of complementary cooling means, used in combination with the cryogenic cooling provided by the cooling fluid. It is appropriate to consider that use in combination includes the possibilities of pre-cooling or post-cooling with respect to the cryogenic cooling.

For this purpose, the cover 18, for example suspended on two jacks 20, supports a motor-driven fan unit 29 which is, preferably, positioned such that its suction is in line with the exhaust duct 21. In such a case, it would appear preferable, but not obligatory, to place the duct 21 in the centre of the upper constitutive wall of the cover 18.

The complementary means of cooling can also use nozzles 30 installed in such a way that they are distributed around the internal wall of the cover 18 and connected to one or more circuits 31 for the supply of pressurized water. The nozzles 30 behave as spray jets distributing, over the entire surface of the pre-shaped blank, a spray or mist of droplets whose task, on contact, is to take up calories from the pre-shaped blank 3 and to contribute to its cooling.

Figure 3 shows a variant embodiment according to which the cover 18 comprises, connected at two of its opposite sides, a recirculating circuit 40 comprising an exhaust pipe 41, a turbine 42 and a delivery pipe 43. The exhaust pipe comprises, on the one hand, a branch 41a connected to the cover 18 and controlled by a butterfly valve or similar device 44 and, on the other hand, a branch 41b opening into the ambient environment and controlled by a butterfly valve 45. The delivery pipe 43 is connected, close to the outlet of the turbine 42, to the supply line 23 supplying cooling fluid which is delivered to the interior of the pipe by means of a jet 28.

With such an installation, the adjustment of the butterfly valve 45 enables an addition of external air and therefore an adjustment of the proportion of the cryogenic mixture driven in recirculation from the volume of confinement as a function of the opening of the butterfly valve 44. This arrangement enables the production of a cooling agent-gas mixture in aerosol form.

The invention is not limited to the described and shown examples of embodiment as various modifications can be applied to them without departing from its scope.

## Claims

1. Method of cooling articles produced by thermoforming by immobilizing a blank of raw material, by subjecting this blank to a rise in temperature up to a desired thermoplasticity threshold, by applying the blank against a shaping die by means of relative displacement, by producing a relative vacuum between the die and the blank, by cooling the blank down to a temperature below that of thermoplasticity, and then by ejecting the shaped article thus produced, characterized in that it consists:
- in covering the shaped blank with a cover delimiting a volume of confinement connected to the atmosphere,
- in injecting a cooling fluid into the volume of confinement, which fluid then expands before escaping naturally into the atmosphere,
- in interrupting the injection as soon as a thermometric probe, placed in contact with the volume, detects an adjustable low control temperature threshold,
- and then in removing the cover to uncover the blank.

2. Method according to Claim 1, characterized in that cooling by circulation of air is used in combination with the cooling by cooling fluid.

3. Method according to Claim 1 or Claim 2, characterized in that a cooling with water spraying is used in combination.

4. Method according to any of Claims 1 to 3, characterized in that the cooling fluid is liquid carbon dioxide.

5. Method according to Claim 5, characterized in that the liquid carbon dioxide is taken from a storage tank at a pressure of $25.10^5$ Pa and at a temperature of approximately 255°K and is injected into the volume of confinement in which substantially atmospheric pressure exists.

6. Method according to Claim 1, characterized in that the low control temperature is between -70 and -10° C.

7. Method according to any of Claims 1 to 6, characterized in that it consists in taking at least a part of the cooling mixture occupying the volume of confinement, in mixing it with an additional portion of gaseous fluid and in recycling it in the volume of confinement in aerosol form.

8. Device for the cooling of articles produced by thermoforming using an installation comprising a frame (1), a shaping die (5), a blank clamp (4) and a mobile heating device (14), characterized in that it comprises, facing the die and on the opposite side of this die with respect to a blank (3) clamped on the frame by the blank clamp, a moving cover (18), delimiting a volume of confinement, connected to the atmosphere and internally bearing jets (28) connected to a source of supply of a cooling fluid (22).

9. Device according to Claim 8, characterized in that the cover (18) is connected to the source (22) by a pipe (23) controlled by a valve (24) which is driven by a thermometric probe (25) disposed inside the cover.

10. Device according to Claim 8 or Claim 9, characterized in that the cover (18) bears water injection nozzles (30).

11. Device according to any of Claims 8, 9 or 10, characterized in that the cover (18) bears a motor-driven fan unit (29) whose suction is in line with the connection to the atmosphere.

12. Device according to any of Claims 8 to 11, characterized in that the cover is connected to a recirculation circuit (40) comprising a supply pipe (43) provided with at least one jet (28), a turbine (42) and an exhaust pipe (41) divided into a branch (41a) connected to the cover (18) and controlled by a butterfly valve (44) and a branch opening into the ambient environment and controlled by a butterfly valve (45).

Fig. 1

Fig.2

Fig.3